# EUROPÄISCHE PATENTSCHRIFT

(11) **EP 2 423 077 B1**
(45) Veröffentlichungstag und Bekanntmachung des Hinweises auf die Patenterteilung: **21.10.2015**
(21) Anmeldenummer: 11178958.2
(22) Anmeldetag: 26.08.2011
(51) Int. Cl.: B62D 21/02, B62D 21/20, B62D 63/02

(54) **Fahrgestell**
Chassis
Châssis

(30) Priorität: 26.08.2010 DE 202010008375 U
(43) Veröffentlichungstag der Anmeldung: 29.02.2012
(73) Patentinhaber: Alois Kober GmbH, 89359 Kötz (DE)
(72) Erfinder: Albert, Thomas, 89278 Nersingen (DE); Dilz, Detlef, 85411 Hohenkammer (DE); Kania, Bernhard, 89165 Dietenheim (DE); Lehner, Helmut, 89359 Kötz (DE); Müller, Thomas, 89346 Bibertal (DE); Spiegler, Roland, 89312 Günzburg (DE); Hall, Steven, Ettington Stratford-upon-Avon Warwickshire CV37 7TE (GB); Hendley, Steven, Kenilworth CV8 2US (GB); Siebel, Johannes, 67117 Limburgerhof (DE)
(74) Vertreter: Ernicke, Klaus Stefan

(56) Entgegenhaltungen:
- EP-A2- 2 388 184
- WO-A1-00/37301
- WO-A1-2011/045034
- DE-A1-102006 005 607
- DE-U1-202009 001 029
- US-A1- 2007 007 794
- US-A1- 2008 007 096

## Beschreibung

Die Erfindung betrifft ein Fahrgestell für frontgetriebene Fahrzeuge mit den Merkmalen im Oberbegriff des Hauptanspruchs.

Ein solches rahmenartiges Fahrgestell ist aus der WO 00/37301 A und DE 10 2006 005 607 A1 bekannt. Es ist als Anbauchassis mit einer hinteren, nicht angetriebenen Achsanordnung ausgebildet mit einem motorisierten Zugkopf über einen Schraubadapter verbunden. Das Fahrgestell ist für die Aufnahme eines Aufbaus konzipiert, wobei am Fahrgestell die für den Fahrbetrieb und den Zugkopf notwendigen Fahrzeugkomponenten, insbesondere Druckluftbehälter und Auspuff, angeordnet sind.

Aus der Praxis ist es bekannt, solche Fahrgestelle universell auszubilden und für unterschiedliche Aufbauten einzusetzen. Aufbauspezifische Aggregate, z.B. Wassertanks, Wasserpumpen, Heizungen, Klimaanlagen oder dgl. Geräte sind im oder am Aufbau angeordnet. Dies ist insbesondere bei Wohnmobilaufbauten der Fall. Gleiches gilt auch für Kühlaufbauten. Die Aufbauten und die Fahrzeuge bzw. Fahrgestelle werden i.d.R. von unterschiedlichen Herstellern gefertigt.

Es ist Aufgabe der vorliegenden Erfindung, ein besseres Fahrgestell aufzuzeigen.

Die Erfindung löst diese Aufgabe mit dem Merkmalen im Hauptanspruch.
Die beanspruchte Anordnung am Fahrgestell ermöglicht es, ein als Heizeinrichtung für Luft, Wasser oder andere Medien und/oder als Wassertank ausgebildetes Aufbauaggregat außerhalb des Aufbaus mit einem Unterflureinbau unterzubringen. Dies hat den Vorteil, dass das Aufbauaggregat eine sichere und geschützte Position einnehmen kann. Dies ist besonders günstig für Kraftfahrzeuge mit Frontantrieb, die eine antriebslose hintere Achsanordnung aufweisen. Deren rahmenartiges Fahrgestell bietet Platz für den Unterflureinbau.

Ein Einbau im Innenraum des Fahrgestells bietet besonderen Schutz gegen äußere Einflüsse und gegen Beschädigungsgefahr, insbesondere bei Unfällen. Der bei Aufbauten, insbesondere begehbaren Aufbauten für Wohnmobile oder Verkaufsfahrzeuge, regelmäßig knappe Platz kann anderweitig genutzt werden. Ein externer Aggregateeinbau erleichtert außerdem die Zugänglichkeit des Aufbauaggregats für Wartungs-, Inspektions- und Reparaturzwecke. Auch eine nachträgliche Demontage und ein Austausch eines Aufbauaggregats werden erleichtert. Weitere Vorteile ergeben sich hinsichtlich Kühlung, Energiezufuhr und ggf. Steuerung des Aufbauaggregats.

Das Aufbauaggregat stützt den Aufbauboden. Es kann auch eine Stützfunktion für das Fahrgestell bieten und kann insbesondere als versteifendes Strukturelement ausgebildet und im Fahrgestell angeordnet sein.

Das Fahrgestell weist eine Halterung zur Aufnahme und Montage eines Aufbauaggregats auf. Die Halterung kann ebenfalls für eine Versteifung des Fahrgestells sorgen. Sie beinhaltet hierfür einen oder mehrere Querträger. Mit einer käfigartigen Halterungsausbildung können kleinere Aufbauaggregate aufgenommen und montiert werden.

Am Fahrgestell können ein oder mehrere Aufbauaggregate angeordnet und mittels der besagten Halterung montiert werden. Die Halterung eines Aufbauaggregats kann von den ohnehin vorhandenen Fahrgestellteilen, insbesondere Längs- und/oder Querträgern, gebildet werden.

Für das Aufbauaggregat ist bevorzugt ein Festeinbau vorgesehen, der für die Versteifungs- und Stabilisierungseffekte vorteilhaft ist. Durch die Aggregatanordnung am Fahrgestell und die Stützfunktion des Aufbauaggregats oder seiner Halterung können bisher vorhandene andere Fahrgestellteile, z.B. Querträger, entfallen. Sie können alternativ beibehalten und mit Zusatzfunktion als Halterung benutzt werden. Hierdurch kann Gewicht am Fahrgestell gespart werden. Vorteilhaft für Fahrkomfort und -sicherheit ist auch die Verlagerung von Massen sowie des Schwerpunkts durch den Unterflureinbau in den unteren Fahrzeugbereich.

Die Aufbauaggregate können bereits in der Erstausrüstung vom Hersteller des Fahrgestells montiert und zusammen mit dem Fahrgestell ausgeliefert werden. Sie können alternativ nachgerüstet werden. Die Aggregatausbildung und die Halterung haben den Vorteil, dass sie die Montagezeit beim Hersteller oder beim Endkunden verkürzen. Der Unterflureinbau eines fluidischen Systems spart Arbeitsaufwand und Material. Durch eine Schnittstellenbildung kann für eine Nachrüstung eine besonders einfache Montagemöglichkeit geschaffen werden, wobei ein Aufbauaggregat nebst Halterung nach dem Plugand-Play-Prinzip gestaltet und montiert werden kann. Hierbei können auch mehrere verschiedene Anbaumöglichkeiten vorhanden sein.

Die Anordnung eines Wassertanks in Unterflurlage hat den Vorteil, dass eine interne Drainage mit einem Drain-Rohr möglich ist. Zudem bietet die Anordnung leichten Zugang für Wartung und Reparaturarbeiten. Durch die Größe des Tanks ist der Platzgewinn innerhalb des Aufbaus besonders hoch. Der Tank kann außerdem in unterschiedlichen Lagen innerhalb des Fahrgestells montiert werden, wobei eine direkte Leitungsverbindung zu der vorgesehenen Anschlussstelle am Aufbau geschaffen werden kann. Der Tank kann ferner mit unterschiedlichen Pumpsystemen inklusive Druckanforderung und Tauchpumpe betrieben werden.

Dieses und auch andere Aufbauaggregate können innerhalb des Fahrgestells verstellt und an die jeweils vom Aufbauhersteller geforderte Anschlussposition gebracht und montiert werden. Die Art, Zahl und Anordnung der Aufbauaggregate lässt sich nachträglich ändern. Die Aufbauaggregate können Standardteile sein, die mit unterschiedlichsten Aufbauten von verschiedenen Herstellern zusammenwirken können. Dies bietet zusätzliche Vorteile hinsichtlich Kosten, Verfügbarkeit und Wirtschaftlichkeit.

Das Aufbauaggregat kann z.B. ein Gerät mit einem Antrieb bzw. einer Energiezufuhr sein. Hierbei handelt es sich um eine Heizung oder um eine Klima- oder Kühlanlage, aber auch um ein Lüftungsgerät oder dgl.. Ein Aufbauaggregat kann auch ein Wassertank oder ein sonstiger Behälter für Fluide sein, der ggf. auch eine Pumpe, Ventile oder dgl. beinhaltet. Besondere Vorteile bestehen bei kastenförmigen bzw. geschlossenen Aufbauten, insbesondere Wohnaufbauten, Kühlkoffern, Verkaufsaufbauten oder dgl., bei denen das Aufbauaggregat den Aufbauinnenraum oder dortige Einrichtungen, z.B. eine Kühltheke, versorgt und damit in Verbindung steht, etwa im Rahmen einer Wärme-, Kälte- oder Luftzufuhr.

Das Aufbauaggregat kann autark sein, wobei alle oder zumindest der Großteil der Steuer-, Energie- und Antriebseinheiten am Fahrgestell angeordnet sind und der Aufbau lediglich ein Verteil- oder Leitungssystem mit definierter Schnittstelle zum Anschluss an das Aufbauaggregat sowie ggf. Bedienelemente, wie Schalter, Steller etc. beinhaltet. Die Zentrale einer Heizungsanlage und/oder einer Wasserversorgung kann dadurch aus dem Aufbau in den Fahrgestellbereich verlegt werden. Auch eine Standardisierung für Aufbauten unterschiedlicher Hersteller oder für verschiedene Aufbauarten ist möglich.

Ein Anbau der Halterung bzw. des Aufbauaggregats am Fahrgestell hat den Vorteil, dass dieser Anbau zu einem beliebigen Zeitpunkt erfolgen kann und dass der Aufbau, insbesondere dessen Boden, für den Aggregatanbau nicht standardmäßig vorbereitet und ausgerüstet sein muss. Insbesondere bedarf es keiner Versteifung des Bodens durch zusätzliche Latten oder dgl.. Der Aufbau wird dadurch vereinfacht und gewichtsmäßig entlastet. Dies spart Bauaufwand und Kosten. Die Halterung kann ihrerseits bedarfsweise und erst beim Aggregatanbau montiert werden. Sie belastet das Fahrgestell hinsichtlich Gewicht und Kosten nicht unnötig, falls auf ein Aufbauaggregat verzichtet wird. Lediglich das Fahrgestell kann standardmäßig durch eine Schnittstellenbildung vorbereitet sein.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein Fahrzeug mit einem Aufbau und einem Fahrgestell in perspektivischer Ansicht,
- Figur 2:: einen Teil des Fahrgestells mit einem eingebauten Aufbauaggregat,
- Figur 3:: die Anordnung von Figur 2 in Draufsicht,
- Figur 4 und 5:: Seitenansichten der Anordnung gemäß Pfeil IV und V von Figur 3,
- Figur 6:: eine teilweise gebrochene Unteransicht der Anordnung von Figur 3,
- Figur 7:: eine Variante eines Fahrgestells gemäß Figur 1 mit mehreren eingebauten Aufbauaggregaten,
- Figur 8:: eine Unteransicht der Anordnung von Figur 7,
- Figur 9:: eine Draufsicht der Anordnung von Figur 7 und 8 und
- Figur 10 und 11:: Seitenansichten der Anordnung gemäß Pfeilen X und XI von Figur 9.

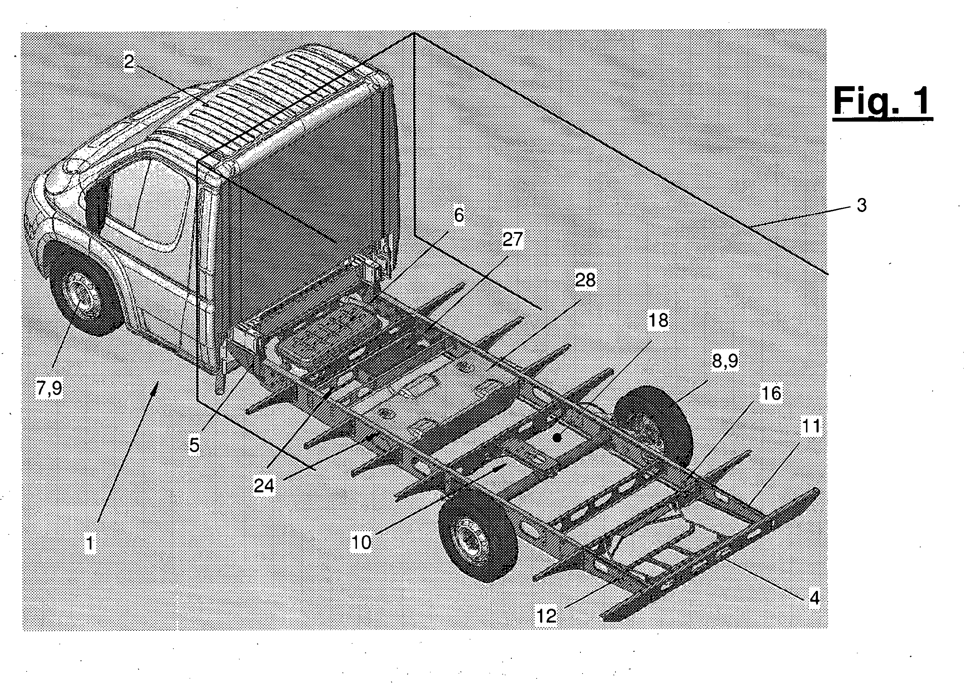

Die Erfindung betrifft ein Fahrgestell (4) eines frontgetriebenen Fahrzeugs (1), welches in Figur 1 als Kraftfahrzeug ausgebildet ist. Die Erfindung betrifft ferner das Kraftfahrzeug (1).

Das in Figur 1 beispielhaft dargestellte Fahrzeug (1) mit Frontantrieb weist eine Fahrerkabine (2) und einen Aufbau (3) auf, die getrennt voneinander angeordnet oder miteinander verbunden sein können. Der Fahrer- und Kabinenbereich kann insbesondere in einen Aufbau (3) integriert sein. Der Aufbau (3) ruht auf dem nachfolgend erläuterten Fahrgestell (4). Der Aufbau (3) kann z.B. kastenförmig oder kofferförmig gestaltet sein und feste und/oder flexible Wände haben. Der Aufbau (3) kann als Wohnwagen- oder Wohnmobilaufbau gestaltet sein, der einen Innenraum mit Schlaf- und Wohnmöglichkeiten, einem Sanitärbereich etc. umschließt und der eine oder mehrere Öffnungen in Form von Fenstern, Türen oder dgl. hat. Der Aufbau (3) kann alternativ ein Kühlkoffer, ein Verkaufs- oder Präsentationsaufbau oder ein anderer vorzugsweise hohler Aufbau sein. Das Fahrzeug (1) ist vorzugsweise ein Wohnmobil oder ein Verkaufsfahrzeug oder ein Lastkraftwagen.

Das Fahrgestell (4) ist z.B. rahmenförmig aufgebaut. Es besteht im gezeigten Ausführungsbeispiel aus einem oder mehreren Längsträgern (11,12) und einem oder mehreren Querträgern (13,14,15,16). In der gezeigten Ausführung erstrecken sich zwei z.B. gerade Längsträger (11,12) in seitlichem Abstand parallel in Fahrzeuglängsrichtung, wobei die Querträger (13, 14, 15, 16) die Längsträger (11,12) miteinander verbinden. Die Querträger (13,14,15,16) könne einteilig oder mehrteilig sein. Im gezeigten Ausführungsbeispiel bestehen diese jeweils aus zwischen den Längsträgern (11,12) angeordneten und mit diesen übe endseitige Beschläge (22) verbundenen Innenteilen oder Mittelteilen.

Einzelne oder alle Querträger (13,14,15,16) können außerdem einen außenseitigen, quer abstehenden Trägerfortsatz (17) an einer oder beiden Seiten aufweisen, der außen an einem Längsträger (11,12) angeordnet und mit diesem ebenfalls über einen Beschlag (22) verbunden ist. Die Beschläge (22) sind als querliegende Platten ausgebildet und mit den Querträgerenden in geeigneter Weise verbunden, z.B. verschweißt. Die gegenseitige Verbindung der Träger (11,12,13,14,15,16) erfolgt durch Schrauben. Hierbei werden Schraubverbindungen eingesetzt, die durch die Beschläge (22) gesteckt sind. In der gezeigten Ausführungsform hat das Fahrgestell (4) die Form eines Leiterrahmens.

Die Längsträger (11,12) und die Querträger (13,14,15,16) können gleichartig ausgebildet sein, wobei sie z.B. als dünnwandige und abgewinkelte Profile aus Stahl oder einem anderen geeigneten Material ausgeführt sind. Ein solches Profil weist z.B. einen aufrechten Mittelsteg (19) auf, der massiv ausgebildet sein kann oder der ein oder mehrere Ausnehmungen (23) aufweisen kann. Am oberen und/oder unteren Rand des Mittelstegs (19) kann ein Quersteg (20,21) angeordnet sein. Im Querschnitt haben die Profile z.B. die gezeigte C-Form.

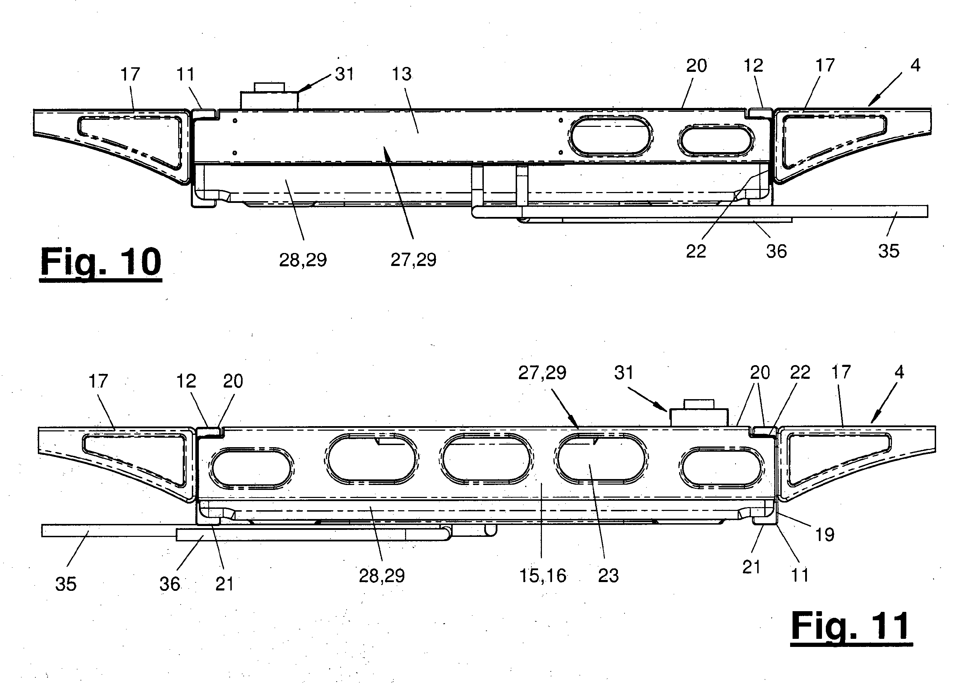

Die Profilöffnung der Längsträger (11,12) ist z.B. zur Fahrgestellmitte bzw. zum Innenraum (18) gerichtet. Die oberen Querstege (20) oder sog. Obergurte können eine Auflagefläche zur Abstützung und Befestigung des Aufbaus (3) und insbesondere dessen Bodens bilden. Hierfür können insbesondere die Obergurte (20) der Längsträger (11,12) dienen. Die Querträger (13,14,15,16) können mit ihren Obergurten (20) in gleicher Höhe zu den anderen längsträgerseitigen Obergurten (20) angeordnet sein und können zu diesem Zweck Ausklinkungen an den Querträgerenden haben. Figur 10 und 11 verdeutlichen diese Ausführung. Sie zeigen außerdem, dass die Querträgerhöhe kleiner als die Längsträgerhöhe sein kann.

Figur 1 zeigt eine Fahrzeugausführung, bei der das Fahrgestell (4) als Anbauchassis ausgebildet ist, welches eine hintere Achsanordnung (8) mit Rädern (9) trägt. Die Achsanordnung (8) kann als Einzelachse, Tandemachse oder in anderer Weise ausgebildet sein. Sie weist Schwinghebel und eine Federerung auf. Die Federung kann eine integrierte Achsfederung sein. Die Achsanordnung (8) ist als Schleppachse ohne eigenen Antrieb ausgebildet.

Im gezeigten Ausführungsbeispiel weist die Achsanordnung (8) ein oder mehrere quer liegende Achsrohre mit einer integrierten Federung, z.B. einer Gummiachsfederung, Drehstabachsfederung, Luftfederung oder dgl. sowie mit endseitigen Schwinghebeln auf, welche ein Rad (9) tragen. Ferner können zwischen den Schwinghebeln und dem Längsträger (11,12) Stoßdämpfer angeordnet sein.

Ferner ist eine Bremseinrichtung (10) vorhanden, die eine Betriebsbremse, insbesondere eine Hydraulikbremse, und eine Feststellbremse mit Bremsgestänge, Seilzug oder dgl. aufweist. Das Anbauchassis (4) ist mit einem frontgetriebenen Zugkopf verbunden, der die vorerwähnte Kabine (2) beinhalten kann und der einen Antriebsmotor nebst Getriebe für einen Frontantrieb, eine Lenkung, vordere Fahrgestellteile mit Längsträgern nebst Querverstrebungen und eine vordere Achsanordnung (7) mit Rädern (9) aufweisen kann.

Das Anbauchassis (4) kann nachträglich an den Zugkopf (2) über eine Verbindungsstelle (5) angebaut werden, wobei das Anbauchassis (4) und der Zugkopf (2) von unterschiedlichen Herstellern stammen können. An der Verbindungsstelle (4) werden die Längsträger (11,12) des Anbauchassis (4) und des Zugkopfes (2) miteinander verbunden, wobei hierfür Schraubadapter eingesetzt werden. Diese können für eine höhengleiche Verbindung oder für einen Höhenversatz sorgen. Insbesondere kann das Anbauchassis (4) gegenüber dem Zugkopf (2) tiefergelegt sein.

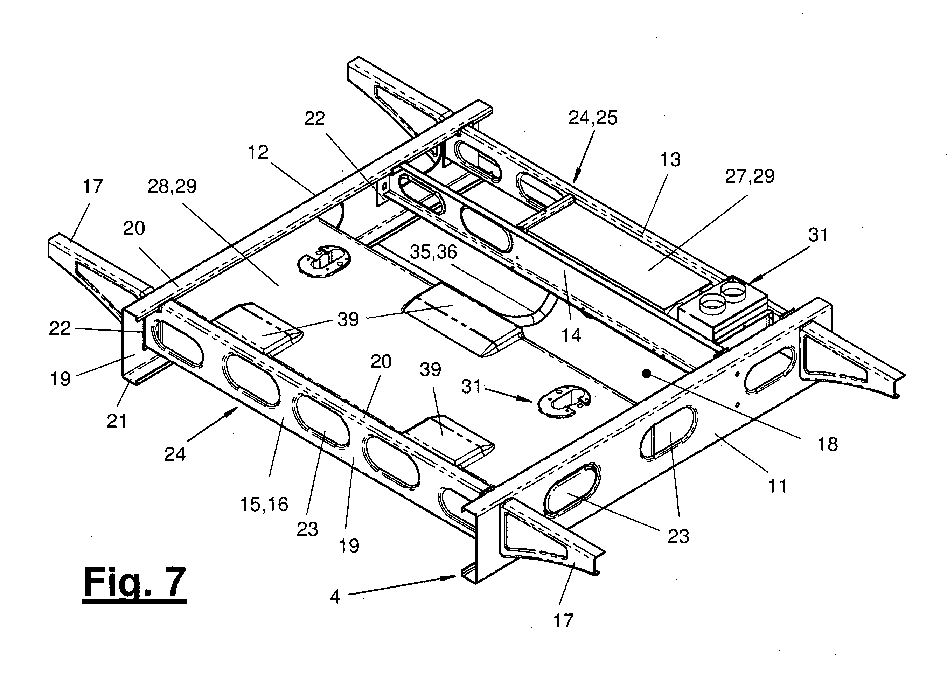

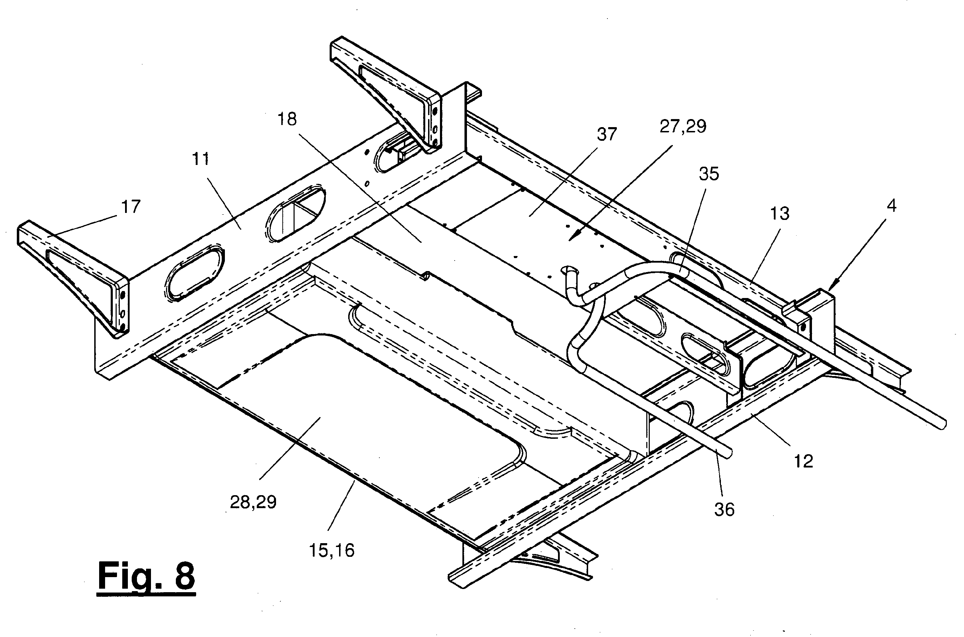

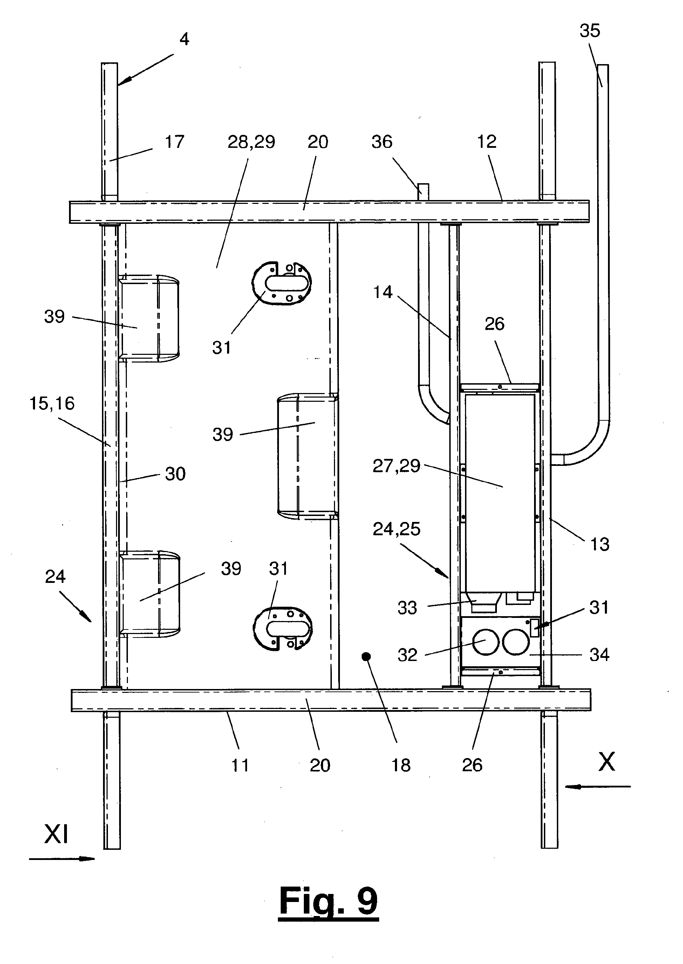

Das Fahrgestell (4) kann ein fahrzeugspezifisches Teil, insbesondere einen Auspuff (6) aufnehmen. Am Fahrgestell (4) ist ferner ein Aufbauaggregat (27,28) angeordnet. Das Aufbauaggregat (27,28) dient zur Versorgung des Aufbaus (3). Es kann mehrfach vorhanden sein. Z.B. sind in Figur 1 und den zugehörigen Detaildarstellungen von Figur 7 bis 11 mehrere Aufbauaggregate (27,28) nebeneinander bzw. hintereinander angeordnet. Das einfach oder mehrfach vorhandene Aufbauaggregat (27,28) ist unter dem Aufbau (3) und unter dessen Boden in Unterflurlage angeordnet und befindet sich im Innenraum (18) zwischen den Längsträgern (11,12) des Fahrgestells (4). Es ist in geeigneter Weise am Fahrgestell (4) montiert, vorzugsweise in Form eines Festeinbaus. Es kann zusätzlich am Aufbauboden befestigt sein. Die Anordnung oder Montage kann alternativ lösbar sein.

Ein Aufbauaggregat (28) kann Zusatzfunktionen haben und kann als Strukturelement ausgebildet sein, welches das Fahrgestell (4) versteift. Es kann hierfür insbesondere eine selbsttragende steife Bauweise haben. Ein Aufbauaggregat (28) stützt ferner den Aufbau (3), insbesondere dessen Boden, z.B. im Bereich des Innenraums (18).

Die ein oder mehreren Aufbauaggregate (27,28) können in geeigneter Weise ausgebildet sein. Ein Anbauaggregat (27) ist z.B. als Heizeinrichtung für Luft, Wasser oder andere Medien ausgebildet. Es kann Bestandteil einer Heizung für den Aufbauinnenraum und/oder als Heizung für eine Warmwasserversorgung und/oder als Bestandteil einer Klimaanlage ausgebildet sein. In den Ausführungsbeispielen ist eine Heizeinrichtung (27) für eine Innenraumbeheizung des Aufbaus (3) vorgesehen, die einen Korpus (29) mit einem integrierten Wärmeerzeuger, insbesondere einem Brenner nebst Steuerung, sowie ggf. eine Umwälzpumpe für ein zu erwärmendes fluidisches Medium aufweist. An den Korpus (29) sind an geeigneter Stelle, insbesondere an der Unterseite, Leitungen (35,36) für Frischluft oder ein Heizmedium, insbesondere für einen gasförmigen oder flüssigen Brennstoff sowie für Abgas, angeschlossen. Das Aufbauaggregat (27) weist an der Oberseite eine Schnittstelle (31) zur Verbindung des Aufbauaggregats (27) mit dem Aufbau (3) auf. Diese kann am Korpus (29) oder an anderer Stelle angeordnet sein.

Das andere Aufbauaggregat (28) ist beispielsweise als Wassertank ausgebildet, der sich quer zwischen den Längsträgern (11,12) erstreckt und der ebenfalls eine Aggregatschnittstelle (31) an der Oberseite zur Verbindung und Medienübertragung mit einem Verbraucher, insbesondere einem Leitungssystem im Aufbau (3), aufweist. Der Wassertank (28) ist z.B. für Frischwasser vorgesehen. Er kann eine eingebaute oder angebaute Pumpeinrichtung mit Steuerung aufweisen. Die Pumpeinrichtung kann auch extern und insbesondere im Aufbau (3) angeordnet sein. Durch die Öffnung in der Aggregatschnittstelle (31) kann Zugang zu einer Tauchpumpe im Tank (28) geschaffen oder eine Pumpe von außen in den Tank (28) eingeführt und gelagert werden. Das Aufbauaggregat (28) kann alternativ ein anderer Behälter für andere fluidische Medien, z.B. für Abwasser, Gas oder dgl. sein.

Das Aufbauaggregat (28) weist ebenfalls einen Korpus (29) auf. Dieser kann z.B. aus Metall, Kunststoff oder anderem geeigneten Material bestehen. Er kann eine selbsttragende und formsteife Bauweise haben und eine Funktion als Stützelement bzw. versteifendes Strukturelement für das Fahrgestell (4) besitzen. An der Oberseite des Korpus (29) können z.B. eine oder mehrere Stützstellen (39) verteilt angeordnet sein, die z.B. als erhabene und bis auf Höhe der Obergurte (20) ragende Sockel am Korpusrand ausgebildet sind. Sie bieten eine Aufbaustütze im Bereich des Innenraums (18) zwischen den Längsträgern (11,12). Alternativ sind andere Bauformen des Korpus (29) und z.B. verformbare Korpuswände oder dgl. möglich.

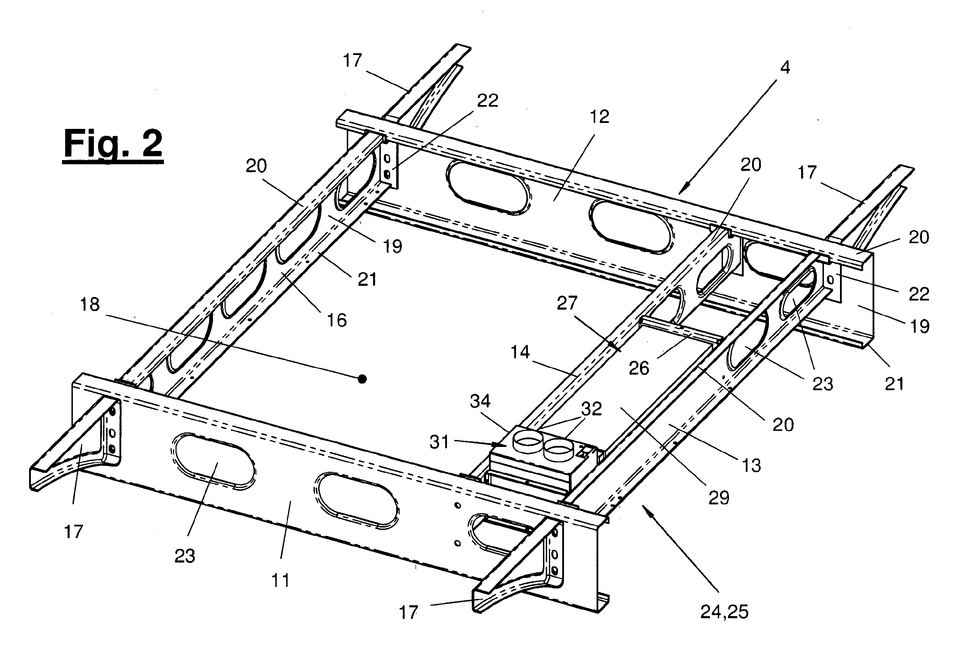

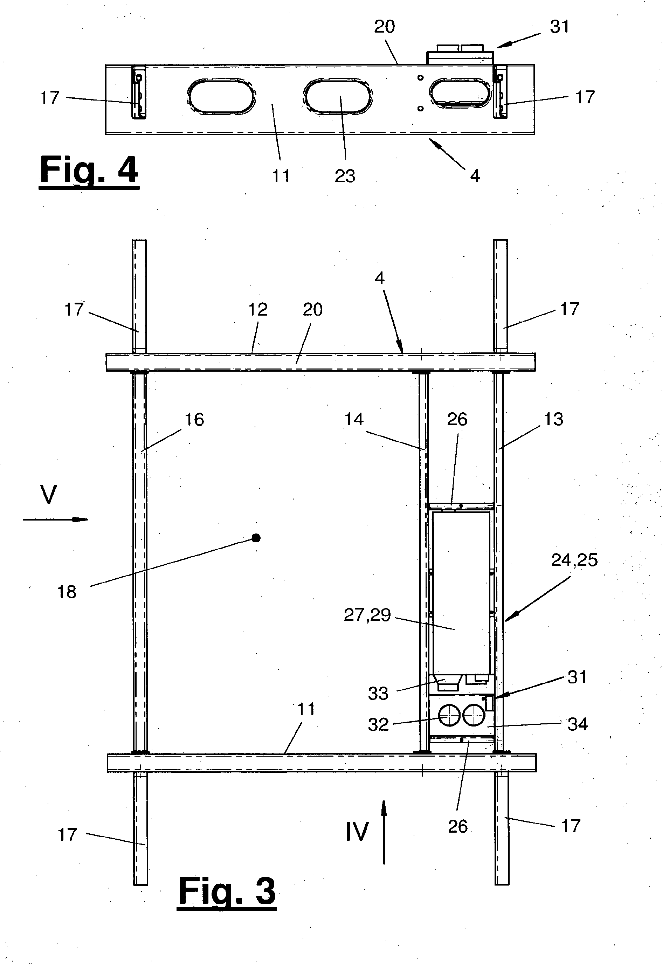

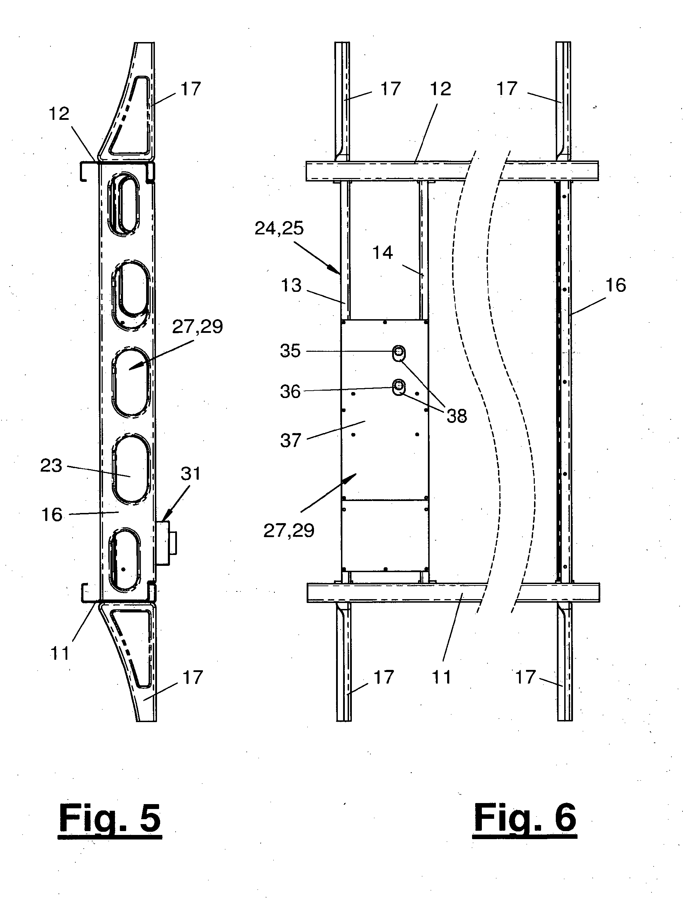

Die Zahl und Ausbildung der Aufbauaggregate (27,28) kann beliebig variieren. Figur 2 bis 6 zeigen eine Variante, bei der nur eine Heizeinrichtung (27) vorgesehen ist. Figur 1 sowie Figur 7 bis 11 zeigen die vorerwähnte Variante mit einer Heizeinrichtung (27) und einem Wassertank oder einem anderen Behälter (28). Der Behälter (28) kann auch mehrfach vorhanden sein. Alternativ kann auch nur ein Aufbauaggregat (28) vorhanden sein. Ferner können ein drittes und weitere Aufbauaggregate am Fahrgestell (4) angeordnet sein.

In den verschiedenen Ausführungsbeispielen sind die Aufbauaggregate (27,28) z.B. liegend angeordnet und haben eine flache Bauweise. Sie ragen nach oben vorzugsweise nicht über die Oberkante des Fahrgestells (4) und insbesondere den Obergurt (20) von dessen Längsträgern (11,12) und ggf. Querträgern (13,14,15,16) hinaus. Nach unten kann die Erstreckung ebenfalls aus Gründen der Bodenfreiheit beschränkt sein. Die Aufbauaggregate (27,28) können den Raum (18) zwischen den Längsträgern (11,12) in der Breite ausfüllen. Sie können alternativ kürzer sein, wie dies z.B. bei der Heizeinrichtung (27) der Fall ist.

Ein oder mehrere Aufbauaggregate (27,28) weisen eine Halterung (24) zur Anordnung und zur Montage am Fahrgestell (4) auf. Die Montagestelle kann variabel sein, wobei sich der Montageort am Fahrgestell (4) ggf. verändern lässt, wodurch z.B. eine Anpassung an unterschiedliche aufbauseitige Schnittstellen und insbesondere eine Adaption an Aufbauten (3) unterschiedlicher Hersteller möglich ist. Hierfür können vorbereitete Schnittstellen, insbesondere in einer Rasterform, vorhanden sein.

Die Halterung (24) weist einen oder mehrere Querträger (13,14,15) auf. Sie kann einen Käfig (25) oder eine Art von Gehäuse bilden, welches ein oder mehrere Aufbauaggregate (27,28) aufnimmt. Die Halterung (24) kann ihrerseits ein das Fahrgestell (4) versteifendes und insbesondere in Querrichtung versteifendes Strukturelement darstellen.

Ein käfigförmiger Halter (24) ist z.B. für die Heizeinrichtung (27) oder für ein anderes relativ kleines Aufbauaggregat vorgesehen. Die diesbezügliche Ausbildung ist in allen gezeigten Ausführungsformen gleich. Die Halterung (24) bzw. der Käfig (25) wird z.B. von zwei parallelen Querträgern (13,14) gebildet, die untereinander durch einen oder mehrere, insbesondere zwei, Verbindungswände (26) in Fahrgestelllängsrichtung untereinander verbunden und versteift sind. Die ein oder mehreren Querstege (20,21) der Querträger (13,14) können voneinander wegweisen und nach außen gerichtet sein, sodass die ebene Trägerseite mit dem Mittelsteg (19) zu dem freien Zwischenraum gerichtet ist, in dem das Aufbauaggregat (27) aufgenommen ist. Die Querträger (13,14) und die ein oder mehreren Verbindungswände (26) umschließen kastenförmig diesen Aufnahmeraum. An der Unterseite und/oder Oberseite kann eine Abdeckung (37) angeordnet sein, die z.B. plattenförmig ausgebildet ist und die mit den Querträgern (13,14) verbunden ist. Sie kann z.B. einen Tragboden zur Befestigung des Korpus (29) bilden und die Heizeinrichtung (27) von unten schützen. Sie kann außerdem ein oder mehrere Durchlässe (38) für eine oder mehrere Leitungen (35,36) aufweisen.

Die Querträger (13,14) können im Aufnahmebereich eine massive Stegausbildung aufweisen und im anderen Bereich ein oder mehrere Ausnehmungen (23) aufweisen. Ein oder mehrere Querträger (13,14) können mit einem oder mehreren außenseitigen Trägerfortsätzen (17) kombiniert sein. Die Querträger (13,14) sind an ihren Stirnenden an den Längsträgern (11,12) und insbesondere an deren Mittelstegen (19) befestigt, wofür die vorbeschriebenen Beschläge (22) verwendet werden. Die Ausnehmungen (23) an den Längs- und/oder Querträgern können der Gewichtseinsparung dienen und auch Zugang von außen zu einem Fahrgestelleinbau, insbesondere einem Aufbauaggregat (27,28) bieten.

Eine Aggregatschnittstelle (31) kann statt am Korpus (29) am Halter (24) angeordnet sein. Hierfür ist z.B. eine Platte (34) an oder auf den Querträgern (13,14) angeordnet, die einen oder mehrere Anschlüsse (32) zur Anbindung an den Aufbau (3) aufweist, die z.B. als Rohrstutzen ausgebildet sind und mit der Öffnung nach oben zum Aufbauboden ragen. Das Aufbauaggregat (27) kann z.B. in der gezeigten Weise liegend im Aufnahmeraum angeordnet sein und kann ein oder mehrere stirnseitige Aggregatanschlüsse (33) besitzen. Diese können ebenfalls stutzen- oder rohrförmig ausgebildet sein und eine horizontale Ausrichtung haben. Zwischen den Anschlüssen (32,33) kann eine im Halter (24) geschützt untergebrachte und ggf. elastische Rohr- oder Schlauchverbindung bestehen. Über die z.B. paarweisen Anschlüsse (32,33) kann das zu erwärmende Medium, insbesondere Luft oder Wasser, aus dem Aufbau zugeführt und rückgeführt werden.

Eine Montage des Aufbauaggregats (28) ist an einem ohnehin vorhandenen Querträger (16) des Fahrgestells (4) möglich. Das Aufbauaggregat (28), z.B. der gezeigte Wassertank, kann in den freien Raum zwischen Längsträgern (11,12) und einem oder mehreren Querträgern (16) eingepasst sein. Es taucht dabei z.B. bereichsweise in die Profilöffnung ein und liegt an den Mittelstegen (19) an und/oder ist dort befestigt.

Ferner ist es möglich, an eine Seitenwand (30) des Korpus (29) eines Aufbauaggregats (27,28) einen Querträger (15) anzubauen und z.B. zu integrieren, wobei der Querträger (15) an den Enden mit den Längsträgern (11,12) verbunden wird. Wie Figur 7 bis 11 verdeutlichen, kann das Aufbauaggregat (28) an drei Seiten mit den Trägern (11,12,15,16) verbunden sein.

In Ergänzung der beanspruchten Merkmalen sind folgende Merkmale einzeln oder in Kombination für die Erfindung bedeutsam. Am Fahrgestell (4) sind mehrere Aufbauaggregate (27,28) nebeneinander angeordnet.

Ein Querträger kann zur Versteifung in ein Aufbauaggregat (27,28) integriert oder an einem Aufbauaggregat (27,28) angebaut sein.
Ein Querträger (15,16) ist mehrteilig ausgebildet und weist ein zwischen Längsträgern (11,12) befindliches Innenteil sowie mindestens einen außen an einem Längsträgern (11,12) angeordneten Trägerfortsatz (17) auf. Ein Längsträger (11,12) und/oder ein Querträger (13,14,15,16) weisen eine Ausnehmung (23) in einem Mittelsteg (19) auf.
Eine Halterung (24) für ein Aufbauaggregat (27,28) weist mehrere, insbesondere zwei parallele Querträger (13,14) mit einer oder mehreren Verbindungswänden (26) und ggf. einer Abdeckung (37) an der Oberseite und/oder Unterseite auf. Eine Abdeckung (37) ist plattenförmig ausgebildet und weist einen Durchlass (38) für eine Leitung (35,36) auf.

Abwandlungen der gezeigten und beschriebenen Ausführungsform sind in verschiedener Weise möglich. Die Zahl, Formgebung und Anordnung des oder der Aufbauaggregate (27,28) kann variieren. Gleiches gilt für die Zahl, Ausbildung und Anordnung der Längs- und Querträger.

### BEZUGSZEICHENLISTE

- 1: Fahrzeug, Kraftfahrzeug
- 2: Kabine, Zugkopf
- 3: Aufbau
- 4: Fahrgestell, Chassis, Anbauchassis
- 5: Verbindungsstelle, Adapter
- 6: Auspuff
- 7: Achsanordnung, Vorderachse
- 8: Achsanordnung, Hinterachse
- 9: Rad
- 10: Bremseinrichtung
- 11: Längsträger
- 12: Längsträger
- 13: Querträger
- 14: Querträger
- 15: Querträger
- 16: Querträger
- 17: Trägerfortsatz
- 18: Innenraum des Fahrgestells
- 19: Steg, Mittelsteg
- 20: Steg, Quersteg, Obergurt
- 21: Steg, Quersteg, Untergurt
- 22: Beschlag
- 23: Ausnehmung
- 24: Halterung
- 25: Käfig
- 26: Verbindungselement, Stützwand
- 27: Aufbauaggregat, Heizung, Klimaanlage
- 28: Aufbauaggregat, Wassertank
- 29: Korpus
- 30: Seitenwand
- 31: Schnittstelle, Aggregatschnittstelle
- 32: Anschluss für Aufbau, Stutzen
- 33: Aggregatanschluss
- 34: Platte
- 35: Leitung für Brennstoff
- 36: Leitung für Abgas
- 37: Abdeckung, Deckplatte
- 38: Durchlass
- 39: Stützstelle

## Patentansprüche

1. Fahrgestell für frontgetriebene Fahrzeuge (1) mit einem Aufbau (3) und mit einem Aufbauaggregat (27,28), wobei das Fahrgestell (4) rahmenartig ausgebildet ist und mehrere Längsträger (11,12) und Querträger (13,14,15,16) in Form von dünnwandigen abgewinkelten Profilen aus Stahl sowie eine hintere Achsanordnung (8) mit Schwinghebeln und einer Federung aufweist, wobei das Fahrgestell (4) als Anbauchassis mit einer hinteren nicht angetriebenen Achsanordnung (8) und mit einer Verbindungsstelle (5) und einem Schraubadapter für eine höhengleiche oder höhenversetzte Verbindung zu einem frontgetriebenen Zugkopf (2) ausgebildet ist, **dadurch gekennzeichnet, dass** ein als Heizeinrichtung für Luft, Wasser oder andere Medien und/oder als Wassertank ausgebildetes Aufbauaggregat (27,28) unter dem Aufbau (3) in Unterflurlage und im Innenraum (18) des Fahrgestells (4) angeordnet und am Fahrgestell (4) montiert ist und den Aufbauboden stützt, wobei das Fahrgestell (4) eine Halterung (24) zur Aufnahme und Montage eines Aufbauaggregats (27,28) aufweist und die Halterung (24) einen Querträger (13,14,15,16) aufweist, der endseitig mit Längsträgern (11,12) des Fahrgestells (4) über endseitige plattenförmige Beschläge (22) und durchgesteckte Schraubverbindungen verbunden ist.

2. Fahrgestell nach Anspruch 1, **dadurch gekennzeichnet, dass** ein Aufbauaggregat (27,28) als ein das Fahrgestell (4) versteifendes Strukturelement ausgebildet und angeordnet ist.

3. Fahrgestell nach Anspruch 1 oder 2, **dadurch gekennzeichnet, dass** ein Querträger (15,16) mehrteilig ausgebildet ist und ein zwischen Längsträgern (11,12) befindliches Innenteil sowie mindestens einen außen an einem Längsträger (11,12) angeordneten Trägerfortsatz (17) aufweist.

4. Fahrgestell nach Anspruch 1, 2 oder 3, **dadurch gekennzeichnet, dass** ein Längsträger (11,12) und/oder ein Querträger (13,14,15,16) als dünnwandiges abgewinkeltes Profil mit einem aufrechten Mittelsteg (19) und mindestens einem Quersteg (20,21) ausgebildet ist.

5. Fahrgestell nach einem der vorhergehenden Ansprüche, **dadurch gekennzeichnet, dass** obere Querstege (20) der Längsträger (11,12) eine Auflagefläche zur Abstützung und Befestigung des Aufbaus (3) und insbesondere dessen Bodens bilden.

6. Fahrgestell nach einem der vorhergehenden Ansprüche, **dadurch gekennzeichnet, dass** die Querträger (13,14,15,16) mit ihren oberen Querstegen (20) in gleicher Höhe zu den anderen längsträgerseitigen oberen Querstegen (20) angeordnet sind und hierfür Ausklinkungen an den Querträgerenden haben.

7. Fahrgestell nach einem der vorhergehenden Ansprüche, **dadurch gekennzeichnet, dass** eine Halterung (24) käfigartig (25) ausgebildet ist und ein Aufbauaggregat (27) an mehreren Seiten umgibt.

8. Fahrgestell nach einem der vorhergehenden Ansprüche, **dadurch gekennzeichnet, dass** ein Aufbauaggregat (27,28) und/oder eine Halterung (24) eine Aggregatschnittstelle (31) zur Verbindung mit dem Aufbau (3) aufweist.

9. Fahrgestell nach einem der vorhergehenden Ansprüche, **dadurch gekennzeichnet, dass** ein Aufbauaggregat (28), insbesondere ein Wassertank, in den freien Raum zwischen Längsträgern (11,12) und einem Querträger (15) eingepasst ist.

10. Fahrgestell nach einem der vorhergehenden Ansprüche, **dadurch gekennzeichnet, dass** an der Oberseite eines formsteifen Korpus (29) des Aufbauaggregats (28) eine oder mehrere Stützstellen (39) verteilt angeordnet und als erhabene und bis auf Höhe der oberen Querstege (20) der Längsträger (11,12) ragende Sockel am Korpusrand ausgebildet sind.

11. Fahrgestell nach einem der vorhergehenden Ansprüche, **dadurch gekennzeichnet, dass** der Wassertank (28) eine eingebaute oder angebaute Pumpeinrichtung mit Steuerung aufweist.

12. Fahrgestell nach einem der vorhergehenden Ansprüche, **dadurch gekennzeichnet, dass** ein Querträger zur Versteifung in ein Aufbauaggregat (27,28) integriert oder an einem Aufbauaggregat (27,28) angebaut ist.

13. Fahrgestell nach einem der vorhergehenden Ansprüche, **dadurch gekennzeichnet, dass** an eine Seitenwand (30) eines Korpus (29) eines Aufbauaggregats (27,28) ein Querträger (15) angebaut, insbesondere integriert ist.

14. Fahrgestell nach einem der vorhergehenden Ansprüche, **dadurch gekennzeichnet, dass** das Fahrgestell (4) ein fahrzeugspezifisches Teil, insbesondere einen Auspuff (6) aufnimmt.

15. Kraftfahrzeug mit einem frontgetriebenen Zugkopf (2) und mit einem als Anbauchassis (4) ausgebildeten Fahrgestell (4) sowie einem Aufbau (3) und einem Aufbauaggregat (27,28), **dadurch gekennzeichnet, dass** am Fahrgestell (4) ein Aufbauaggregat (27,28) angeordnet ist und das Fahrgestell (4) nach einem der Ansprüche 1 bis 14 ausgebildet ist.

## Claims

1. Chassis for front-wheel-drive vehicle (1) with a superstructure(3) and a superstructure unit (27, 28), wherein the chassis (4) is designed in the manner of a frame and has a plurality of longitudinal members (11, 12) and cross members (13, 14, 15, 16) in the form of thin-walled angled profiles composed of steel, and a rear axle arrangement (8) with oscillating levers and a suspension, wherein the chassis (4) is designed as an attachable chassis with a rear non-driven axle arrangement (8) and with a connecting point (5) and a screw adapter for a height-identical or height-offset connection to a front-wheel-drive tractor head (2), **characterized in that** a superstructure unit (27, 28) designed as a heating device for air, water or other media and/or as a water tank is arranged under the superstructure (3) in an underfloor position and is arranged in the interior (18) of the chassis (4) and is mounted on the chassis (4) and supports the superstructure floor, wherein the chassis (4) has a holder (24) for receiving and installing a superstructure unit (27, 28), and the holder (24) has a cross member (13, 14, 15, 16) which is connected on the end sides to longitudinal members (11, 12) of the chassis (4) via end-side, platelike fittings (22) and inserted screw connections.

2. Chassis according to Claim 1, **characterized in that** a superstructure unit (27, 28) is designed and arranged as a structural element which reinforces the chassis (4).

3. Chassis according to Claim 1 or 2, **characterized in that** a cross member (15, 16) is of multi-part design and has an inner part located between longitudinal members (11, 12) and at least one member extension (17) arranged on the outside of a longitudinal member (11, 12).

4. Chassis according to Claim 1, 2 or 3, **characterized in that** a longitudinal member (11, 12) and/or a cross member (13, 14, 15, 16) is designed as a thin-walled angled profile with an upright central web (19) and at least one transverse web (20, 21).

5. Chassis according to one of the preceding claims, **characterized in that** upper transverse webs (20) of the longitudinal members (11, 12) form a supporting surface for supporting and fastening the superstructure (3) and in particular the floor thereof.

6. Chassis according to one of the preceding claims, **characterized in that** the cross members (13, 14, 15, 16) are arranged with the upper transverse webs (20) thereof at the same height as the other upper transverse webs (20) on the longitudinal-member side and for this purpose have notches at the ends of the cross members.

7. Chassis according to one of the preceding claims, **characterized in that** a holder (24) is designed in the manner of a cage (25) and surrounds a superstructure unit (27) on a plurality of sides.

8. Chassis according to one of the preceding claims, **characterized in that** a superstructure unit (27, 28) and/or a holder (24) has a unit intersection (31) for connection to the superstructure (3).

9. Chassis according to one of the preceding claims, **characterized in that** a superstructure unit (28), in particular a water tank, is fitted into the free space between longitudinal members (11, 12) and a cross member (15).

10. Chassis according to one of the preceding claims, **characterized in that** one or more support points (39) are arranged distributed on the upper side of a dimensionally stiff body (29) of the superstructure unit (28) and are formed on the body edge as raised bases projecting as far as the height of the upper transverse webs (20) of the longitudinal members (11, 12).

11. Chassis according to one of the preceding claims, **characterized in that** the water tank (28) has an incorporated or added pumping device with a control system.

12. Chassis according to one of the preceding claims, **characterized in that** a cross member is integrated into a superstructure unit (27, 28) or is attached to a superstructure unit (27, 28) for reinforcement purposes.

13. Chassis according to one of the preceding claims, **characterized in that** a cross member (15) is attached to, in particular integrated in, a side wall (30) of a body (29) of a superstructure unit (27, 28).

14. Chassis according to one of the preceding claims, **characterized in that** the chassis (4) receives a vehicle-specific part, in particular an exhaust (6).

15. Motor vehicle with a front-wheel-drive tractor head (2) and with a chassis (4) designed as an attachable chassis (4) and with a superstructure (3) and a superstructure unit (27, 28), **characterized in that** a superstructure unit (27, 28) is arranged on the chassis (4) and the chassis (4) is designed according to one of Claims 1 to 14.

## Revendications

1. Châssis pour véhicules (1) à traction avant, comprenant une caisse (3) et une unité structurelle (27, 28), le châssis (4) étant réalisé en forme de cadre et présentant plusieurs longerons (11, 12) et traverses (13, 14, 15, 16) sous la forme de profilés coudés à parois minces en acier ainsi qu'un agencement d'essieu arrière (8) avec des leviers oscillants et une suspension, le châssis (4) étant réalisé sous la forme d'un châssis de montage avec un agencement d'essieu arrière (8) non entraîné et avec un point de connexion (5) et un adaptateur par vissage pour un assemblage à la même hauteur ou décalé en hauteur à une tête de traction (2) pour traction avant, **caractérisé en ce qu'**une unité structurelle (27, 28) réalisée sous forme de dispositif de chauffage pour de l'air, de l'eau ou d'autres milieux et/ou sous forme de réservoir d'eau est disposée sous la caisse (3) en position sous plancher et dans l'espace interne (18) du châssis (4) et est montée sur le châssis (4) et supporte le plancher de la caisse, le châssis (4) présentant un support (24) pour recevoir et monter une unité structurelle (27, 28) et le support (24) présentant une traverse (13, 14, 15, 16) qui est connectée du côté de l'extrémité à des longerons (11, 12) du châssis (4) par le biais de ferrures (22) en forme de plaque du côté de l'extrémité et par le biais d'assemblages vissés traversants.

2. Châssis selon la revendication 1, **caractérisé en ce qu'**une unité structurelle (27, 28) est réalisée et disposée sous forme d'un élément structurel rigidifiant le châssis (4).

3. Châssis selon la revendication 1 ou 2, **caractérisé en ce qu'**une traverse (15, 16) est réalisée en plusieurs parties et présente une partie intérieure se trouvant entre des longerons (11, 12) et au moins une saillie de support (17) disposée à l'extérieur au niveau d'un longeron (11, 12).

4. Châssis selon la revendication 1, 2 ou 3, **caractérisé en ce qu'**un longeron (11, 12) et/ou une traverse (13, 14, 15, 16) sont réalisés sous forme de profilé coudé à parois minces avec une nervure centrale droite (19) et au moins une nervure transversale (20, 21).

5. Châssis selon l'une quelconque des revendications précédentes, **caractérisé en ce que** des nervures transversales supérieures (20) des longerons (11, 12) forment une surface d'appui pour supporter et fixer la caisse (3) et notamment son plancher.

6. Châssis selon l'une quelconque des revendications précédentes, **caractérisé en ce que** les traverses (13, 14, 15, 16) avec leurs nervures transversales supérieures (20) sont disposées à la même hauteur que les autres nervures transversales supérieures (20) du côté des longerons et présentent à cet effet des entailles au niveau des extrémités des traverses.

7. Châssis selon l'une quelconque des revendications précédentes, **caractérisé en ce qu'**un support (24) est réalisé sous forme de cage (25) et entoure une unité structurelle (27) sur plusieurs côtés.

8. Châssis selon l'une quelconque des revendications précédentes, **caractérisé en ce qu'**une unité structurelle (27, 28) et/ou un support (24) présentent une interface d'unité (31) pour l'assemblage à la caisse (3).

9. Châssis selon l'une quelconque des revendications précédentes, **caractérisé en ce qu'**une unité structurelle (28), en particulier un réservoir d'eau, est ajustée dans l'espace libre entre des longerons (11, 12) et une traverse (15).

10. Châssis selon l'une quelconque des revendications précédentes, **caractérisé en ce qu'**une ou plusieurs zones d'appui (39) sont disposées de manière répartie au niveau du côté supérieur d'un corps de forme rigide (29) de l'unité structurelle (28) et sont réalisées sous forme de socles rehaussés et faisant saillie jusqu'à la hauteur des nervures transversales supérieures (20) des longerons (11, 12) au niveau du bord du corps.

11. Châssis selon l'une quelconque des revendications précédentes, **caractérisé en ce que** le réservoir d'eau (28) présente un dispositif de pompe encastré ou rapporté avec une commande.

12. Châssis selon l'une quelconque des revendications précédentes, **caractérisé en ce qu'**une traverse de rigidification est intégrée dans une unité structurelle (27, 28) ou est rapportée au niveau d'une unité structurelle (27, 28).

13. Châssis selon l'une quelconque des revendications précédentes, **caractérisé en ce qu'**une traverse (15) est rapportée, notamment intégrée, au niveau d'une paroi latérale (30) d'un corps (29) d'une unité structurelle (27, 28).

14. Châssis selon l'une quelconque des revendications précédentes, **caractérisé en ce que** le châssis (4) reçoit une partie spécifique aux véhicules, en particulier un échappement (6).

15. Véhicule automobile comprenant une tête de traction (2) pour traction avant et un châssis (4) réalisé sous forme de châssis rapporté (4) ainsi qu'une caisse (3) et une unité structurelle (27, 28), **caractérisé en ce qu'**une unité structurelle (27, 28) est disposée au niveau du châssis (4) et le châssis (4) est réalisé selon l'une quelconque des revendications 1 à 14.
